# EUROPÄISCHE PATENTANMELDUNG

(11) **EP 3 944 750 A1**
(43) Veröffentlichungstag der Anmeldung: **02.02.2022**
(21) Anmeldenummer: 21185997.0
(22) Anmeldetag: 16.07.2021
(51) Int. Cl.: A01D 34/30, A01D 57/00

(54) **ANTRIEB FÜR DOPPELMESSER-SCHNEIDSYSTEME**

(30) Priorität: 28.07.2020 DE 102020119829
(71) Anmelder: ESM Ennepetaler Schneid- u. Mähtechnik GmbH & Co. KG, 58256 Ennepetal (DE)
(72) Erfinder: OEHLER, Wolfgang, 51688 Wipperfürth (DE); NÜRNBERG, Alexander, 58313 Herdecke (DE)
(74) Vertreter: Patentanwälte Dörner & Kötter PartG mbB

(57) **Zusammenfassung**

Die Erfindung betrifft einen einteiligen Antrieb für Doppelmesser-Schneidsysteme, welcher aus einem Gestell (1), einem Kurbelantrieb (2), Schwinghebeln (3) sowie Schnitthöhen-Führungskomponenten besteht und mit einem Balkenrücken verbunden ist, an dem ein Messerrücken für ein Obermesser (6) und ein Messerrücken für ein Untermesser (7) angeordnet sind. Das Gestell (1), der Kurbelantrieb (2), die Schwinghebel (3) einschließlich der Schnittstellenkomponenten zu den Mähmessern, die Schnitthöhen-Führungskomponenten und der Balkenrücken sind im bodennahen Bereich in Arbeitsrichtung hinter der Schnittzone angeordnet.

## Beschreibung

Die Erfindung betrifft einen einteiligen Antrieb für Doppelmesser-Schneidsysteme nach dem Oberbegriff des Patentanspruchs 1.

Doppelmesser-Schneidsysteme finden Anwendung, um Halmgüter aller Art wie Grünfutter, Sonderkulturen, Getreide, Gemüse oder dergleichen zu schneiden. Sie finden darüber hinaus Anwendung beim Schnitt von Hecken, Straßenbegleitgrün oder in der Gewässerpflege (Gewässerrändern ebenso wie unter Wasser).

Der Antrieb solcher Doppelmesser-Schneidsysteme kann auf verschiedene Weise erfolgen, bspw. mit Hilfe eines Reckschwingenantriebs (vgl. bspw. DM-Reckschwingenantrieb der Anmelderin). Solche Antriebe sind dadurch gekennzeichnet, dass sie bodenseitig eine Kufe aufweisen, auf der der Antrieb in der Schnitthöhe höhenverstellbar geführt ist. Der Antrieb selbst basiert auf einem Gestell, welches an seinem dem Boden abgewandten Ende mit einem zu einem Reck vergleichbaren Gerüst versehen ist, an dem Schwinghebel zum Antrieb für Ober- und Untermesser angeordnet sind. An die Schwinghebel greifen Pleuel an, welche von einer Kurbelwelle angetrieben werden. Die Kurbelwelle weist auf ihrer, meist der Arbeitsrichtung abgewandten Seite wiederum unterschiedliche Schnittstellen zu deren optional mechanischer, hydraulischer, oder elektrischer Antriebsresource zum Anschluss an eine landwirtschaftliche Arbeitsmaschine auf.

Der bekannte Antrieb erfüllt die an ihn gestellten Anforderungen. Allerdings hat sich als nachteilig erwiesen, dass einzelne Komponenten des Antriebs im bodennahen Bereich in Arbeitsrichtung vor und neben der Schnittzone angeordnet sind. Dadurch wird stehendes Schnittgut von den bodennahen Komponenten niedergedrückt und kann nachfolgend nicht mehr effektiv geschnitten werden. Eine gegenüber in der übrigen Schnittzone des jeweiligen Schneidwerks entstehende, deutlich höhere Stoppellänge ist die Folge, wenn mit der Anschlussmahd der Schnitt in derselben Fahrtrichtung erfolgt. Das führt zu Streifenbildung im Stoppelbild. Zudem sind bei dem bekannten Reckschwingenantrieb einzelne Komponenten im bodennahen Bereich außerhalb der Schnittbreite angeordnet. Diese seitliche Anordnung einzelner Komponenten außerhalb der Schnittbreite hat negativen Einfluss auf die Transportbreite der gesamten Mähwerkseinheit. Durch gesetzliche Bestimmungen ist nämlich die Transportbreite begrenzt. Die überstehenden seitlichen Komponenten bestimmen aber gemeinsam mit dem Schneidwerk die Gesamtbreite des bekannten Reckschwingenantriebs. Folglich ist die Arbeitsbreite des Schneidwerks geringer als die zulässige Transportbreite, was die Schneidleistung reduziert.

Hier will die Erfindung Abhilfe schaffen. Der Erfindung liegt die Aufgabe zugrunde, einen einteiligen Antrieb für Doppelmesser-Schneidsysteme zu schaffen, bei dem keine Komponenten im bodennahen Bereich in Arbeitsrichtung vor bzw. außerhalb der Schnittzone angeordnet sind. Gemäß der Erfindung wird diese Aufgabe mit den Merkmalen des Patentanspruchs 1 gelöst.

Mit der Erfindung ist ein Antrieb für Doppelmesser-Schneidsysteme geschaffen, bei dem keine Komponenten im bodennahen Bereich in Arbeitsrichtung vor bzw. außerhalb der Schnittzone angeordnet sind. Dadurch wird vermieden, dass stehendes Schnittgut von den bodennahen Komponenten niedergedrückt oder geschoben wird. Einer Streifenbildung ist somit effektiv entgegengewirkt. Gleichzeitig ist die effektive Arbeitsbreite von der zulässigen Transportbreite entkoppelt, wodurch höhere Arbeitsbreiten bei zulässiger Transportbreite möglich sind.

Nachfolgend sind für das Verständnis der vorliegenden Erfindung einzelne Begrifflichkeiten definiert:
Schneidwerk: Unter einem Schneidwerk ist in dieser Anmeldung die Gesamtheit aus Balkenrücken, Messer-Führungselementen und Mähmessern, inkl. Schnittstelle zum Traggestell und zum oszillierenden Antrieb zu verstehen.
Antrieb: Unter einem Antrieb ist in dieser Anmeldung die Umsetzung der Rotation einer Kurbelwelle in eine Translation der Mähmesser, inkl. der Schnittstelle zum Doppelmesserschneidwerk und zum Traggestell (Rahmen) zu verstehen.
Mähwerk: Unter einem Mähwerk ist in dieser Anmeldung die Gesamtheit aus Schneidwerk, Antrieb und Rahmen (Traggestell) einschließlich Schnittstelle zum Trägergerät zu verstehen.
Schnittzone: Unter einer Schnittzone ist in dieser Anmeldung der Raum zu verstehen, der von der effektiv geschnittenen Arbeitsbreite des Schneidwerks multipliziert mit der schneidend wirksamen Klingentiefe (vor den Messerrücken) und der Bestandshöhe gebildet ist.
Schnittebene: Unter einer Schnittebene ist in dieser Anmeldung das Niveau zu verstehen, auf welchem der Bestand abgeschnitten wird.
Bodennah: Unter bodennah ist in dieser Anmeldung der Bereich zwischen dem Boden und der Schnittebene zu verstehen.
Schnittstellenkomponenten zu den Mähmessern: Zum Begriff, Schnittstellenkomponenten zu den Mähmessern, im Sinne der vorliegenden Anmeldung zählen die Messerköpfe und die Kugelgelenke.

Vorteilhaft ist es, wenn der Kurbelantrieb eine Kurbelwelle umfasst, deren Drehachse parallel zur Schnittebene ausgerichtet ist. Bevorzugt treibt die Kurbelwelle eine Antriebschwinge für das Obermesser und eine Antriebsschwinge für das Untermesser an, wobei die Schwingachsen der Antriebschwingen im Wesentlichen parallel zur Schnittebene ausgerichtet sind.

In Weiterbildung der Erfindung ist das Gestell an seiner dem Boden abgewandten Seite mit einem Rohr versehen, an dem die Lager für die Schwinghebel angeordnet sind. Die Lager sind dabei vorzugsweise benachbart zur Längsmittellinie des Arms angeordnet. Dadurch ist die Möglichkeit geschaffen, die Drehachse der Schwinghebel in der Mittelstellung des Messerhubs in einer Vertikalen oberhalb des tragenden Bolzens des zugehörigen Kugelgelenks, welches die Verbindung zum Obermesser bzw. zum Untermesser herstellt, zu positionieren und somit die Schnittstellenkomponenten zu den Mähmessern hinter der Schnittzone anzuordnen

In anderer Weiterbildung der Erfindung ist an dem Gestell auf der in Arbeitsrichtung gewandten Seite eine Räumeinrichtung vorgesehen. Durch die Anordnung der Räumeinrichtung vor den Antriebskomponenten ist gewährleistet, dass der Gutfluss ungehindert bis zum Räumvorgang erfolgt und somit das Räumen ungehindert erfolgen kann.

In Ausgestaltung der Erfindung umfasst die Räumeinrichtung einen Räumkörper, der durch die Kurbelwelle antreibbar ist. Somit ist für den Betrieb der Räumeinrichtung kein separater Antrieb erforderlich.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die Ansicht eines Antriebs für Doppelmesser-Schneidsysteme;
- Figur 2: den Schnitt entlang der Linie B-B in Figur 1;
- Figur 3: die Seitenansicht von links des in Figur 1 dargestellten Antriebs;
- Figur 4: den Schnitt entlang der Linie A-A in Figur 1;
- Figur 5: die perspektivische Darstellung des in Figur 1 dargestellten Antriebs;
- Figur 6: die Seitenansicht von rechts eines Antriebs in anderer Ausführung;
- Figur 7: die perspektivische Darstellung des Antriebs mit abschnittsweiser Darstellung eines angebauten Doppelmesser-Schneidwerks;
- Figur 8: den Schnitt durch einen Portalrahmen mit angebautem Antrieb;
- Figur 9: die perspektivische Darstellung des Antriebs in anderer Ausbildung mit abschnittsweiser Darstellung eines angebauten Doppelmesser-Schneidwerks;
- Figur 10: die Draufsicht auf den in Figur 9 dargestellten Antrieb in einer ersten Stellung des Schneidwerks;
- Figur 11: die Draufsicht auf den in Figur 9 dargestellten Antrieb in einer zweiten Stellung des Schneidwerks und
- Figur 12: die Draufsicht auf den in Figur 9 dargestellten Antrieb in einer dritten Stellung des Schneidwerks.

Der als Ausführungsbeispiel gewählte einteilige Antrieb für Doppelmesser-Schneidsysteme ist nach Art eines Reckschwingenantriebs ausgebildet. Er besteht aus einem Gestell 1, einem Kurbelantrieb 2, Schwinghebeln 3, 3' sowie - nicht dargestellten - Schnitthöhen-Führungskomponenten, bspw. in Form von Gleitkufen. An dem Gestell 1 ist auf der in Arbeitsrichtung gewandten Seite eine Räumeinrichtung 5 vorgesehen. Mit dem Antrieb werden Ober- und Untermesser 6, 7 eines Doppelmesser-Schneidwerks 9 betrieben. Der Antrieb ist im Ausführungsbeispiel an einem Portalrahmen 8 angebaut.

Das Gestell 1 besteht bodenseitig aus zwei miteinander verschraubten Bodenplatten 11, 11'. An den Bodenplatten 11, 11' ist eine Kufe 12 befestigt, die beim Mähen auf dem Boden gleitet. Mit der Bodenplatte 11' sind zwei Stützen 13, 13' verschweißt, die an ihrem der Kufe 12 abgewandten Bereich mit einem Knotenblech 14 sowie einem Rohr 15 fest verbunden sind. An seinem in Arbeitsrichtung gewandten Ende nimmt das Rohr 15 ein Kugellager 16 auf. In diesem Bereich ist das Rohr 15 nach Art eines Kragarms ausgebildet und weist zwei beabstandet zueinander angeordnete Flansche 17 auf.

Der Kurbelantrieb 2 umfasst eine Kurbelwelle 21, deren Drehachse parallel zur Schnittebene ausgerichtet ist. Die Kurbelwelle 21 durchsetzt die Stützen 13. An ihrem der Arbeitsrichtung abgewandten Ende ist an der Kurbelwelle 21 ein Kupplungsstück 25 und am Gestell 1 ein Verbindungsflansch 22 vorgesehen, welche die Verbindung zum Betrieb des erfindungsgemäßen Antriebs durch die landwirtschaftliche Arbeitsmaschine herstellen. Die Kurbeln der Kurbelwelle 21 sind benachbart zur Stütze 13' vorgesehen. An ihnen sind jeweils Pleuel 23, 23' befestigt. An dem dem Verbindungsflansch 22 abgewandten Ende weist die Kurbelwelle 21 einen Zwischenadapter 24 auf, der mit der Räumeinrichtung 5 verbunden ist. Eine Drehung der Kurbelwelle 21 führt zu einer Drehbewegung des Zwischenadapters 24.

Die Schwinghebel 3, 3' haben eine sichelförmige Ausbildung. Der Schwinghebel 3 treibt das Untermesser 7 an und ist in Arbeitsrichtung betrachtet vor dem Schwinghebel 3' angeordnet, der das Untermesser antreibt. Die Schwinghebel 3, 3' sind an ihrem der Kufe 12 abgewandten Ende beweglich an - nicht dargestellten - Bolzen gelagert, welche in Bohrungen in den Flanschen 17 montiert sind. Erkennbar sind die Schwinghebel 3, 3' in diesem Bereich benachbart zur Längsmittellinie des Rohrs 15 angeordnet. An ihrem der Kufe 12 zugewandten Ende sind die Schwinghebel 3, 3' jeweils mit einer Bohrung versehen, die zur Befestigung von Kugelgelenken 31 dient. Die Kugelgelenke 31 bilden die Verbindung zu dem Obermesser 6 und dem Untermesser 7. Der Antrieb der Schwinghebel 3, 3' erfolgt mit Hilfe der Pleuel 23, 23'. Hierzu weisen die Schwinghebel 3, 3' in ihrem konvex gekrümmten Bereich jeweils eine Bohrung auf, durch die Schrauben 32 hindurchtreten, welche in Gewinde in den Pleuelköpfen eingeschraubt sind. Folglich führt eine Drehbewegung der Kurbelwelle 21 zu einer oszillierenden Hin- und Her-Bewegung der Pleuelköpfe. Dies wiederum führt zu einer Schwingbewegung der in den Flanschen 17 gelagerten Schwinghebel 3, 3'. Diese Schwingbewegung führt dann über die Kugelgelenke 31 zu einer oszillierenden Bewegung von Obermesser 6 und Untermesser 7.

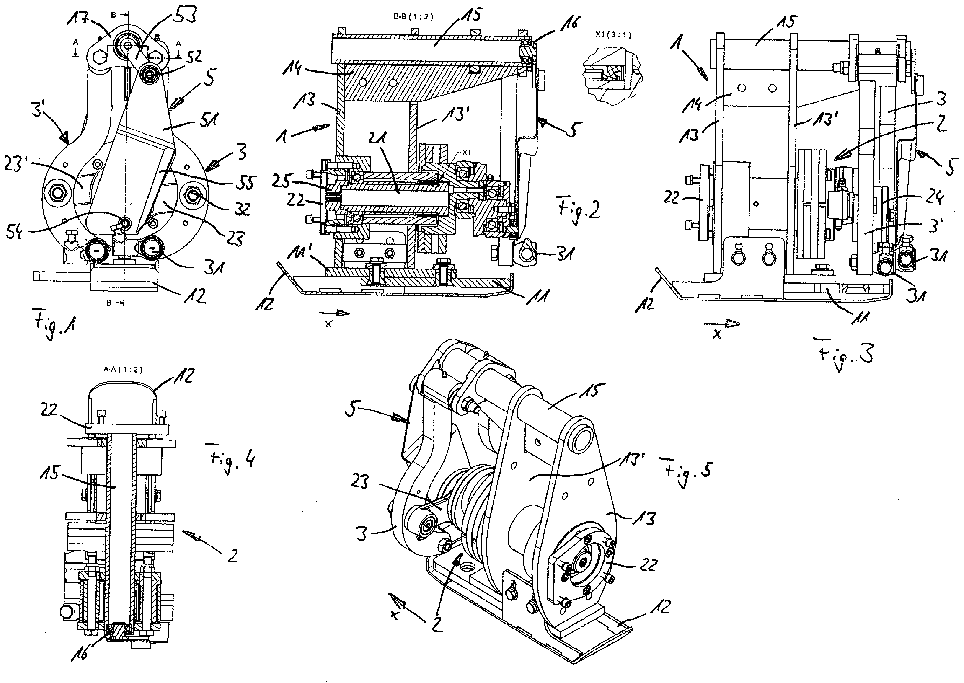

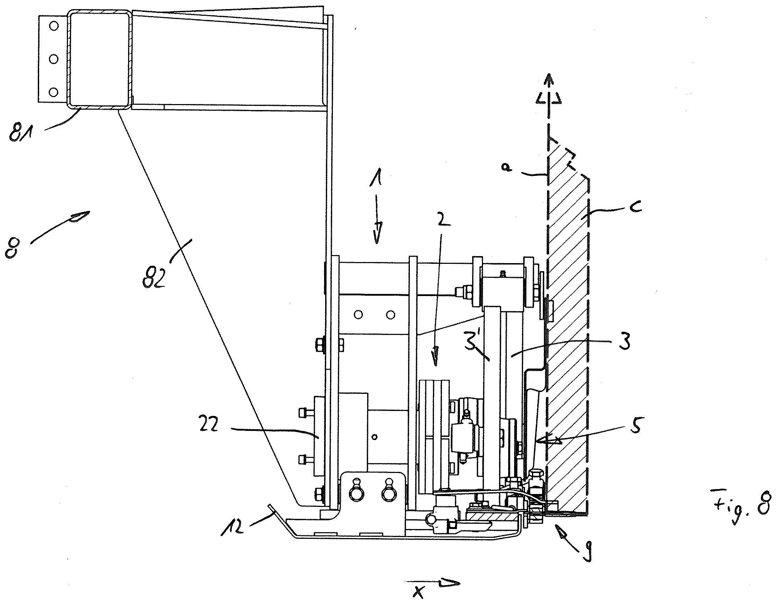

Die Räumeinrichtung 5 umfasst im Ausführungsbeispiel nach den Figuren 1 bis 8 einen Räumkörper 51. Der Räumkörper 51 ist in seinem der Kufe 12 abgewandten Ende mit einer Bohrung versehen, durch die eine Schraube 52 hindurchtritt. Die Schraube 52 dient zur Verbindung des Räumkörpers 51 mit einem Exzenterhebel 53, welcher drehbar in dem Kugellager 16 und damit auf der Längsmittellinie des Rohrs 15 gelagert ist. An seinem der Kufe 12 zugewandten Ende ist der Räumkörper 51 exzentrisch mit einer weiteren Bohrung zum Durchtritt eines Zapfens 54 versehen, der mit dem Zwischenadapter 24 zusammenwirkt. Eine Drehung des Zwischenadapters 24 führt somit zu einer Rotationsbewegung des Zapfens 54 um die Längsmittellinie der Kurbelwelle 21, wodurch eine Bewegung des Räumkörpers 51 hervorgerufen ist. Der Räumkörper 51 ist in seinem der Kufe 12 zugewandten Bereich abschnittsweise mit einer Abkantung 55 versehen, welche beim Mähen aufgrund der Bewegung des Räumkörpers 51 eine verstärkende, zur Schneidwerksmitte gerichtete, seitliche Förderung des Mähgutes bewirkt.

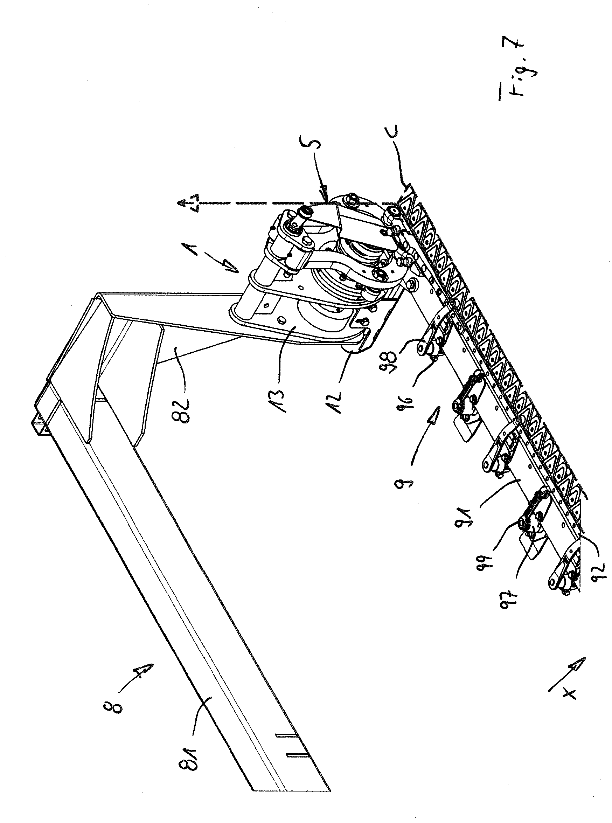

In Figur 7 ist der erfindungsgemäße einteilige Antrieb in an einem Portalrahmen 8 angebauten Zustand einschließlich angebautem Doppelmesser-Schneidwerk 9 dargestellt. Der Portalrahmen 8 ist von einem U-Profil 81 gebildet, welches horizontal ausgerichtet ist und an seinen stirnseitigen Enden mit Abschlussblechen 82 versehen ist. Das dargestellte Abschlussblech 82 erstreckt sich in Arbeitsrichtung x vor das U-Profil 81 und ist rechtwinklig zur Arbeitsrichtung abgekantet. Die Stütze 13 des Gestells 1 ist mit dem Abschlussblech 82 verschraubt.

Das Doppelmesser-Schneidwerk 9 umfasst einen Balkenrücken 91, an dem ein Messerrücken 92 für ein Obermesser und ein Messerrücken 93 für ein Untermesser angeordnet ist, welche oszillierend hin- und hergehend angetrieben sind. An dem Messerrücken 92 für das Obermesser sind eine Vielzahl von Schneidelementen 6, an dem Messerrücken 93 für das Untermesser eine Vielzahl von Schneidelementen 7 befestigt. An dem Balkenrücken 91 sind Messerführungen angeordnet, die Führungsbaugruppen 96 für das Obermesser und Führungsbaugruppen 97 für das Untermesser umfassen. An den Führungsbaugruppen 96 sind Führungsarme 98, an den Führungsbaugruppen 97 Führungsarme 99 befestigt, welche jeweils an den freien Enden über eine Kombination von Buchsen mit Führungszapfen mit den an den Messerrücken 92, 93 angeordneten Schneidelementen 6, 7 zusammenwirken.

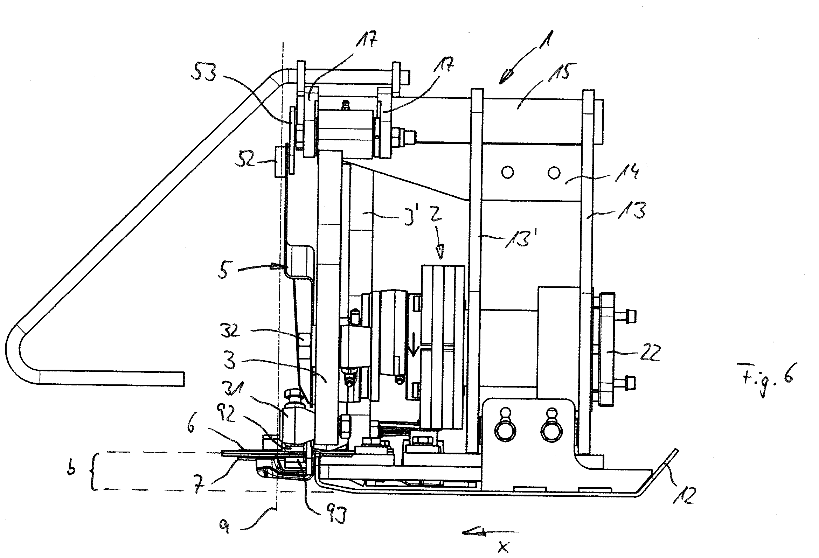

Wie insbesondere Figur 6 zu entnehmen ist, sind das Gestell 1, der Kurbelantrieb 2, die Schwinghebel 3, einschließlich der Schnittstellenkomponenten zu den Mähmessern, und die Schnitthöhen-Führungskomponenten im bodennahen Bereich in Arbeitsrichtung x hinter der in Figur 7 strichpunktiert dargestellten und mit "c" gekennzeichneten Schnittzone angeordnet. Die Schnittzone c ist ersichtlich in Figur 6 in Arbeitsrichtung x vor der mit "a" gekennzeichneten Linie. Selbst die Kugelgelenke 31, welche die Schnittstelle zu Obermesser 6 und Untermesser 7 bilden, ragen nicht in diese Zone hinein.

Ebenso sind das Gestell 1, der Kurbelantrieb 2, die Schwinghebel 3, einschließlich der Schnittstellenkomponenten zu den Mähmessern, und die Schnitthöhen-Führungskomponenten im in Figur 6 mit "b" gekennzeichneten bodennahen Bereich hinter der Schnittzone angeordnet. Die über diese Schnittzone seitlich hinausragenden Teile, also beispielsweise der konvexe Abschnitt eines Schwinghebels 3 ist deutlich oberhalb des bodennahen Bereichs positioniert, so dass keine Beeinträchtigung des Schnittergebnisses erfolgt.

Erkennbar sind sowohl die Drehachse der Kurbelwelle 21 als auch die Schwingachsen der Schwinghebel 3 parallel zur Schnittebene ausgerichtet.

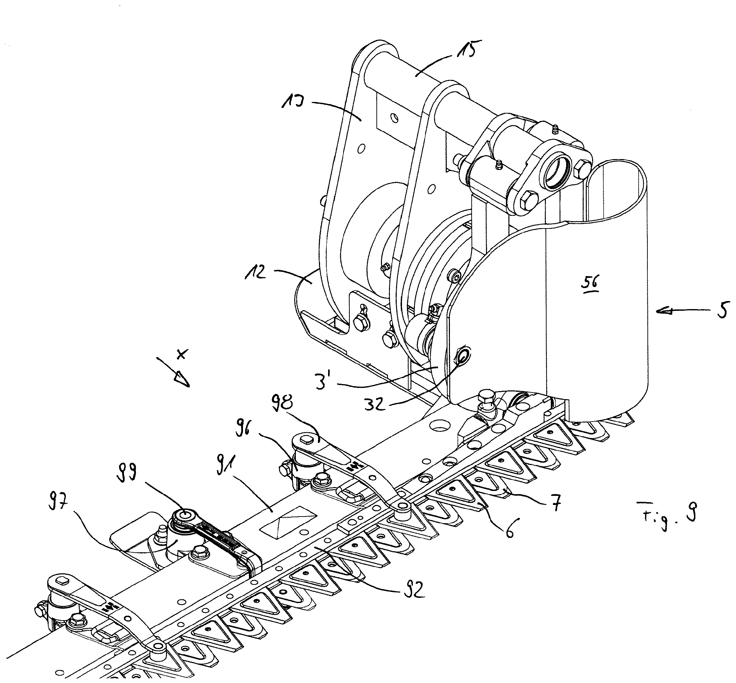

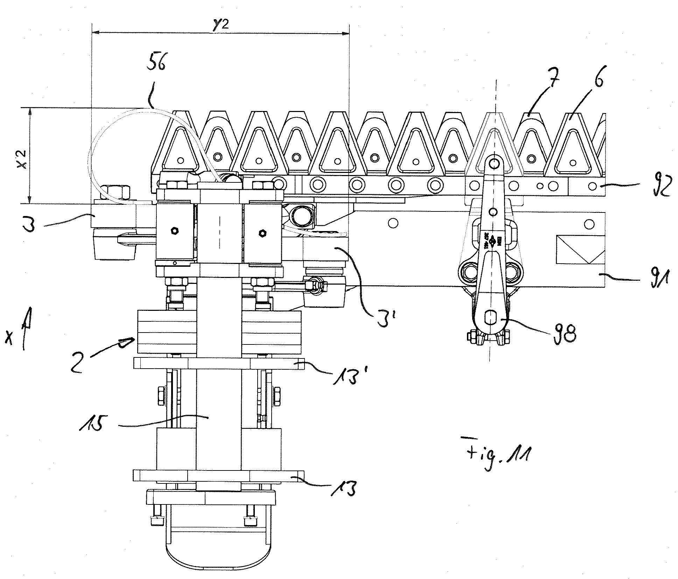

Im Ausführungsbeispiel nach den Figuren 9 bis 12 ist die Räumeinrichtung 5 von einem Schild 56 gebildet. Das Schild 56 ist aus einem flexiblen Material hergestellt, insbesondere robustem Gummi oder Kunststoff. Das Schild ist einerseits am Schwinghebel 3, andererseits am Schwinghebel 3' befestigt. Zur Befestigung des Schildes 56 dienen die Schrauben 32, welche Löcher in dem Schild 56 durchsetzen. Das Schild 56 hat in montiertem Zustand eine geschwungene, in der Draufsicht annähernd hakenartige Form.

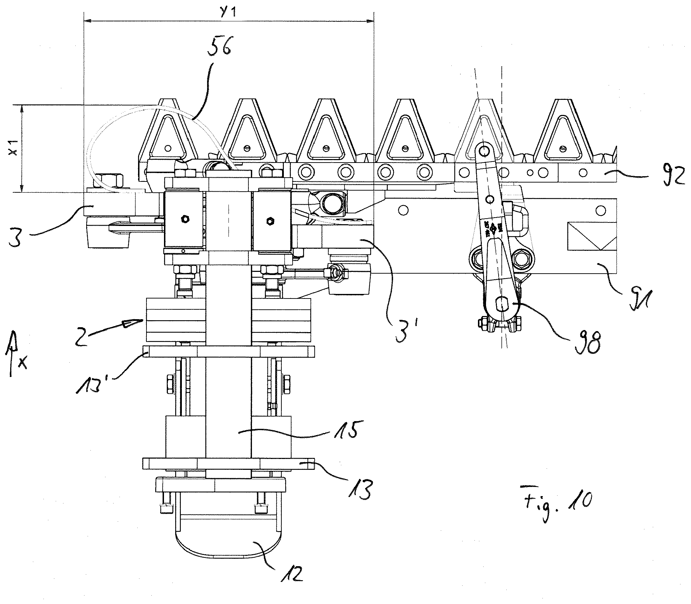

Bei dieser Art der Räumeinrichtung 5 erstreckt sich das Schild 56 aufgrund der hakenartigen Gestaltung von dem Schwinghebel 3' aus einem Bereich in Arbeitsrichtung x hinter den Messerrücken 92, 93 in einen Bereich vor den Messerücken 92, 93 und weiter wieder in einen Bereich hinter den Messerücken 92, 93 zum Schwinghebel 3 (vgl. Figuren 10 bis 12). Durch die Befestigung des Schilds 56 an den Schwinghebeln 3, 3' erfährt das Schild 56 beim Betrieb des Doppelmesser-Schneidsystems eine ständige Verformung aufgrund der Schwingbewegung der in den Flanschen 17 gelagerten Schwinghebel 3, 3', wie dies den Figuren 10 bis 12 zu entnehmen ist.

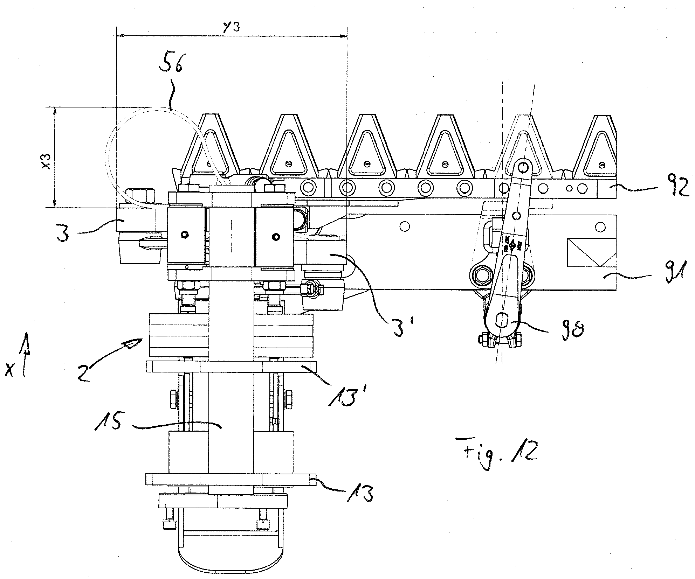

In den Figuren 10 bis 12 ist jeweils eine andere Stellung des Doppelmesser-Schneidwerks 9 mit den Ober- und Untermessern 6, 7 bzw. ein anderer Hub der Schwinghebel 3, 3' dargestellt. In Figur 10 ist dabei der maximale Hub und damit der maximale Abstand der äußeren Enden der Schwinghebel 3 und 3' (äußerer Totpunkt) zueinander dargestellt, welcher mit y₁ gekennzeichnet ist. Figur 12 zeigt dagegen den geringsten Abstand der äußeren Enden der Schwinghebel 3 und 3' zueinander (innerer Totpunkt), gekennzeichnet mit y₃. Erkennbar führt die Bewegung der Schwinghebel 3 und 3' auch zu einer Änderung der Ausdehnung des Schilds 56 in Arbeitsrichtung. Während der äußerste Punkt des Schilds 56 am äußeren Totpunkt gemäß Figur 10 hinter dem freien Ende der Ober- und Untermesser 6, 7 liegt, reicht das Schild 56 an dem in Figur 12 dargestellten inneren Totpunkt über die freien Ende der Ober- und Untermesser 6, 7 hinaus. Ablesbar ist dieser Effekt an den in den Figuren 10 bis 12 angegebenen Maßen x₁ bis x₃.

Die wechselnde Form des Schildes 56 ergibt sich in Abhängigkeit der Hubstellungen vom äußeren zum inneren Totpunkt im Verhältnis der Maße x zu y in den Figuren 10 bis 12. Wie aus diesen Figuren ersichtlich, ergibt sich aus der Bewegung oszillierenden Bewegung der Befestigungspunkte des Schilds 56 eine Stauchung und Streckung des Schilds 56. Daraus resultiert ein Schwingfördereffekt von der Außenseite zur Mitte des Schneidwerks, der das vor dem Antrieb durch das Schneidwerk geschnittene Gut nach innen über den Balkenrücken des Schneidwerks abführt.

## Patentansprüche

1. Einteiliger Antrieb für Doppelmesser-Schneidsysteme, welche aus einem Gestell (1), einem Kurbelantrieb (2), Schwinghebeln (3) sowie Schnitthöhen-Führungskomponenten besteht und mit einem Balkenrücken verbunden ist, an dem ein Messerrücken für ein Obermesser (6) und ein Messerrücken für ein Untermesser (7) angeordnet sind, **dadurch gekennzeichnet, dass** das Gestell (1), der Kurbelantrieb (2), die Schwinghebel (3) einschließlich der Schnittstellenkomponenten zu den Mähmessern, die Schnitthöhen-Führungskomponenten und der Balkenrücken im bodennahen Bereich in Arbeitsrichtung hinter der Schnittzone angeordnet ist.

2. Einteiliger Antrieb nach Anspruch 1, **dadurch gekennzeichnet, dass** der Kurbelantrieb (2) eine Kurbelwelle (21) umfasst, deren Drehachse im Wesentlichen parallel zur Schnittebene ausgerichtet ist.

3. Einteiliger Antrieb nach Anspruch 1 oder 2, **dadurch gekennzeichnet, dass** die Kurbelwelle (21) einen Schwinghebel (3') für das Obermesser (6) und einen Schwinghebel (3) für das Untermesser (7) antreibt, wobei die Schwingachsen der Schwinghebel (3, 3') parallel zur Schnittebene ausgerichtet sind.

4. Einteiliger Antrieb nach einem der vorgenannten Ansprüche, **dadurch gekennzeichnet, dass** das Gestell (1) an seiner dem Boden abgewandten Seite mit einem Rohr (15) versehen ist, an dem die Lager für die Schwinghebel (3, 3') angeordnet sind.

5. Einteiliger Antrieb nach einem der vorgenannten Ansprüche, **dadurch gekennzeichnet, dass** die Lager benachbart zur Längsmittellinie des Rohrs (15) angeordnet sind.

6. Einteiliger Antrieb nach einem der vorgenannten Ansprüche, **dadurch gekennzeichnet, dass** an dem Gestell (1) auf der in Arbeitsrichtung gewandten Seite eine Räumeinrichtung (5) vorgesehen ist.

7. Einteiliger Antrieb nach einem der vorgenannten Ansprüche, **dadurch gekennzeichnet, dass** die Räumeinrichtung (5) einen Räumkörper (51) umfasst.

8. Einteiliger Antrieb nach einem der vorgenannten Ansprüche, **dadurch gekennzeichnet, dass** der Räumkörper (51) durch die Kurbelwelle (21) antreibbar ist.

9. Einteiliger Antrieb nach einem der vorgenannten Ansprüche, **dadurch gekennzeichnet, dass** an der Kurbelwelle (21) ein Zwischenadapter (24) angeordnet ist, an dem exzentrisch ein Zapfen (54) vorgesehen ist, der den Zwischenadapter (24) mit dem Räumkörper (51) verbindet.

10. Einteiliger Antrieb nach einem der vorgenannten Ansprüche, **dadurch gekennzeichnet, dass** der Räumkörper (51) an seinem dem Zwischenadapter (24) abgewandten Ende an einen Exzenterhebel (53) angebunden ist.

11. Einteiliger Antrieb nach einem der vorgenannten Ansprüche, **dadurch gekennzeichnet, dass** der Exzenterhebel (53) an seinem dem Räumkörper (51) abgewandten Ende auf der Längsmittellinie des Rohrs (15) drehbar gelagert ist.

12. Einteiliger Antrieb nach einem der vorgenannten Ansprüche, **dadurch gekennzeichnet, dass** die Räumeinrichtung (5) von einem Schild (56) gebildet ist.

13. Einteiliger Antrieb nach Anspruch 12, **dadurch gekennzeichnet, dass** das Schild (56) aus einem flexiblen Material hergestellt ist.

14. Einteiliger Antrieb nach Anspruch 12 oder 13, **dadurch gekennzeichnet, dass** das Schild (56) an den Schwinghebeln (3, 3') befestigt ist.

15. Einteiliger Antrieb nach einem der vorgenannten Ansprüche, **dadurch gekennzeichnet, dass** sich das Schild (56) von dem Schwinghebel (3') aus einem Bereich in Arbeitsrichtung hinter den Messerrücken (92, 93) in einen Bereich vor den Messerücken (92, 93) und weiter in einen Bereich hinter den Messerücken (92, 93) zum Schwinghebel (3) erstreckt.
